# EUROPEAN PATENT SPECIFICATION

(11) **EP 4 336 058 B1**
(45) Date of publication and mention of the grant of the patent: **05.11.2025**
(21) Application number: 22425041.5
(22) Date of filing: 12.09.2022
(51) Int. Cl.: F16B 37/06

(54) **AN INSERT ELEMENT AS WELL AS A SETTING METHOD THEREFOR**
EINSETZELEMENT SOWIE EIN SETZVERFAHREN DAFÜR
ÉLÉMENT D'INSERTION ET SON PROCÉDÉ DE RÉGLAGE

(43) Date of publication of application: 13.03.2024
(73) Proprietor: Böllhoff Verbindungstechnik GmbH, 33649 Bielefeld (DE)
(72) Inventor: CARIDI, Demetrio, 10095 Grugliasco Turin (IT); BERTOLINI, Mattia, 10128 Turin (IT)
(74) Representative: HWP Intellectual Property

(56) References cited:
- DE-A1- 102008 059 343
- US-A1- 2015 322 994

## Description

### 1. Field of the invention

The present invention is related to an insert element to be set within a component opening to establish a basis for a connection to a further component. Furthermore, the present invention relates to a component comprising the insert element installed in a component opening as well as to a method for setting the insert element within a component opening.

### 2. Background of the invention

A variety of designs of an insert element is known to fasten a nut construction or bolt construction in a component opening. Based on the fastening construction, such insert elements are mounted in a pre-punched component opening.

An alternative design of the fastening construction punches a fastening opening while being riveted. Such a design requires a punch shaft adapted in construction and stability to pierce through the component and fasten the rivet element by crimping in a continuous process.

DE 1 400 934 discloses an insert element having a cylindrical base body and a hollow cylindrical shaft for fastening the insert element. The base body as well as the cylindrical shaft are milled or knurled around their cylindrical periphery to form a series of grooves. The series of grooves is subdivided by intermediate V-shaped projections. The grooves and projections are capable of biting into the surface of a component when the insert element is forced into the component opening. This outer construction serves to increase the locking action of the insert element against rotation and torsional stress during use. However, this construction is less resistant against pullout forces and radial loads.

EP 2 029 903 discloses a component assembly made of a sheet metal part and a rivet nut. The rivet nut also has a cylindrical base body and a cylindrical rivet shaft. The rivet shaft is adapted to be riveted to sheet metal parts. Thus, this prior art is remotely related since the rivet element is not fastened in a pre-punched component opening.

For fastening the rivet element, a ring groove is provided having a U-shaped cross-section with a radial outer sidewall if viewed in an axial sectional plane. The U-shaped ring groove is adapted in volume to receive a sheet metal thickness within a ring recess after folding the riveting shaft.

US 2015/0322994 A1 discloses a nut or an insert that includes a body having a through-opening which may be threaded, a deformable pilot portion having an annular wall surrounding the opening, and anti-rotation features arranged around the pilot portion that resist rotation of the nut or the insert due to an applied torque when the nut or the insert is installed in a sheet of metal. The pilot portion being deformable to form a lip or a flange to trap a portion of the sheet between the body and the lip or the flange to resist pull out. The anti-rotation features are all made of radially extending splines which project from an annular surface of a fastening groove. The splines have a triangular cross section with a leading edge directed to a component surface.

A further anti-rotation feature is formed by a plurality of keyways extending in an axial direction of the insert element. Each keyway coincides with the plurality of splines to sandwich the sheet metal of the component therebetween. Based on the shape of the spline and the keyway, the material clamping of the sheet metal is essentially realized by the spline edge engaging the rounded keyway.

EP 3 309 415 Al discloses an insert element having a head part with a sheet metal contacting the surface. The cylindrical rivet shaft has anti-rotation features formed by notches which extend over substantially the total length of the rivet section. According to different design alternatives, the notches are combined with a plurality of anti-rotation projections arranged at the contact surface of the sheet metal component. These elongated radial projections are aligned with a notch and/or with a notchless gap, respectively. The notch does neither match in shape nor in size to the adjacent protection.

Regarding the prior art, it is an object of the present invention to provide an alternative design of an insert element which is reliably fastened within a component opening and which withstands torque applied to the insert element.

### 3. Summary of the invention

The above problem is solved by an insert element according to independent claim 1, as well as by a setting method according to independent claim 7.

Further details and embodiments of the invention are described in the specification, the accompanying drawings and the appending claims.

The present invention provides an insert element with a cylindrical base body comprising, along a central longitudinal axis and opposing one another, a fastening side for fastening the insert element to a component opening and a mounting side for mounting an add-on part, at the mounting side, a fastening bolt projects from the base body or a fastening opening having a fastening structure extends into the base body, the fastening side includes a hollow-cylindrical shaft coaxially to the central longitudinal axis of the base body having a circumferential shaft wall, wherein in a direction axially facing away from the base body, a radial inner side of the shaft wall extends parallel, and a radial outer side of the shaft wall extends radially inwardly in an inclined manner with respect to the central longitudinal axis, so that the hollow cylindrical shaft tapers, and an annular groove encompasses the hollow cylindrical shaft, the groove forming a triangular cross-sectional area in an axial cut parallel to the central longitudinal axis.

Such an insert element as provided by the present invention is generally known based on its functions. According to its construction, it is preferably set or fastened within a pre-punched component opening of a component. After fastening the insert element, it provides a mounting structure for an add-on part or the like. Consequently, the insert element equips the component with the mounting structure of alternative constructions, e.g. a fastening bolt, or an inner thread.

For providing the component with such a mounting structure, the insert element can be reliably fastened within a component opening, preferably a pre-punched component opening. To this end, a hollow-cylindrical shaft extends from the base body at the fastening side to be inserted into a pre-punched component opening.

The hollow-cylindrical shaft is qualified by a circumferentially extending shaft wall. The shaft wall tapers in an axial direction away from the base body. To this end, the radial outer wall of the hollow-cylindrical shaft is inclined radially inwardly with respect to the central longitudinal axis of the hollow-cylindrical shaft while running axially away from the base body.

Thereby, the shaft has preferably a larger outer diameter close to the base body supporting a structural stability of the insert element. While axially moving away from the base body, the outer diameter of the hollow-cylindrical shaft is preferably continuously reduced by reducing the wall thickness of the surrounding shaft wall.

The preferred smaller outer diameter of the hollow-cylindrical shaft at its leading end facilitates introducing the shaft into the pre-punched component opening.

Further preferred, the increasing outer diameter of the shaft while axially inserting into a component opening reduces a possible clearance between the inner edge of the component opening and the outer wall of the shaft to preferably achieve a tight pre-installation of the insert element within the component opening.

While fastening the insert element within the component opening, the edge of the opening is forced into the annual groove of the base body. The inner groove shape and its limiting walls cooperate with the shaft wall folded to the base body during the setting process in the component opening. The opening edge of the component is forced into the triangular receiving volume of the groove to increase the retaining forces for the insert element.

According to the invention, the cross-sectional area of the annular groove is formed right-angled triangularly, and a first and a second wall side of the annular groove extends along a hypotenuse and an adjacent side of the right-angled triangular area.

For fastening the insert element, favorable results were achieved by using a rectangular groove shape surrounding the shaft. The rectangular shape or area is formed if seen the groove in an axial cut running along the central longitudinal axis of the insert element.

The triangular groove shape is formed by two solid groove sides and one imaginary side. The imaginary side extends perpendicularly with respect to the longitudinal axis of the insert element. Within the groove, one groove side extends parallel to the central longitudinal axis. Thereby, it forms the adjacent side of the right-angled triangular area.

The preferred anti-rotation features (see below) positioned within such a groove shape provide a better resistance against the turning of the insert element fastened within the component opening. It preferably follows from the folding structure of the component material within the right-angled triangular groove shape.

According to a further preferred embodiment of the inventive insert element, within the annular groove, a plurality of anti-rotation webs is provided, being evenly distributed in circumferential direction, extending radially and projecting in an axial direction away from the base body.

Preferably, the anti-rotation webs are formed bead-like and are each ending in a radial depression in the radial outside of the shaft wall.

Further preferred, a plurality of anti-rotation webs project from at least one of the groove sides. Consequently, these anti-rotation webs are forced into the component wall or material during the setting process to increase a torque resistance of the insert element within the component opening.

Dependent on the shape and size of the anti-rotation webs, the anti-turning effect is preferably enforced. As a preferred design, the anti-rotation webs are formed bead-like and extend in a radial direction with regard to the central longitudinal axis.

It was established that the radially extending anti-rotation beads or webs are more effective if preferably ending in a radial depression in the radial outer shaft wall. Thereby, the component material anchors not only at the axially projecting bead-like webs, but also within the radial depressions having a preferred concave shape.

Additionally preferred, the radial depression has a larger extension than an incoming anti-rotation web so that the radial depression forms a radial anti-rotation depression. Thus, and as an additional preferred embodiment of the present invention, the radial depressions have a larger extension as compared to a cross-sectional area of the anti-rotation webs adjacent to the radial outer wall of the shaft.

Thereby, the radial depressions may preferably receive component material not only displaced by the anti-rotation features.

According to a further preferred embodiment of the rivet element, a first and a second limiting even wall of the annular groove enclose an angle in the range from 45° to 65°, preferably 50° to 60°, and further preferred 54°.

For defining a size and shape of the material receiving groove volume of the annular groove, the first and the second limiting walls are arranged in a certain angle range. This angle range can be varied preferably with the material properties of the component material.

As most preferred, the angle has a size of 54°. If the component material is more deformable, the angle between the first and the second walls can be chosen larger.

According to another preferred embodiment of the insert element, the inclined radial outside of the hollow cylindrical shaft encloses an angle in the range from 5° to 10°, preferably 7° to 9° and most preferred of 8.5°, with the central longitudinal axis of the insert element.

As already discussed above, the hollow-cylindrical shaft of the insert element tapers in a direction away from the base body. To this end, the radial outer wall of the shaft is inclined radially inwardly if running away from the base body. Based on the radial inward inclination, the outer shaft wall and the longitudinal axis form an inclination angle in the range of 5° to 10°, preferably 7° to 9° and further preferred of 8,5°.

The present invention also discloses a component having a component opening, in which an insert element according to one of the above constructions was set.

Furthermore, the present invention provides a setting method of an insert element according to one of the above constructions in a pre-punched component opening of a component, comprising the following steps: providing an installation punch and an installation die co-axially aligned to each other so that a central axial circular projection of the installation punch facing the installation die (step S1), arranging the component opening of the component in a co-axial alignment with the central axial circular projection between the installation punch and the installation die (step S2), placing the insert element according to one of the above constructions into the component opening with the hollow-cylindrical shaft facing to the installation punch, and relatively moving the installation die and the installation punch to each other in a setting motion whereby the hollow-cylindrical shaft is fastened by crimping within the component opening.

### 4. Short description of the drawings

In the following, the present invention will be described in detail based on the drawings. In the drawings, the same reference signs denote the same elements and/or components. It shows:
- Fig. 1: a perspective view of a first preferred embodiment of the inventive insert element provided as a nut having a threaded opening,
- Fig. 2: a perspective view of a second preferred embodiment of the insert element provided with a threaded bolt at the mounting side,
- Fig. 3: a plan view of a preferred fastening side of the insert element which is preferably used for the inventive insert element having a bolt or an opening at the mounting side,
- Fig. 4: a sectional view of the preferred embodiment according to figure 3 is provided with a threaded opening and cut along the plane A-A of figure 3,
- Fig. 5: an enlarged depiction of the encircled area C of fig. 4,
- Fig. 6: a sectional view along the line D-D of fig. 3,
- Fig 7: a sectional view along the line B-B of fig. 3,
- Fig. 8: an enlarged view of the annular groove of fig. 7,
- Fig. 9: a sectional view of a preferred component with an insert element set in the component opening,
- Fig. 10: a schematic illustration of a preferred arrangement for setting the insert element in a pre-punched component opening,

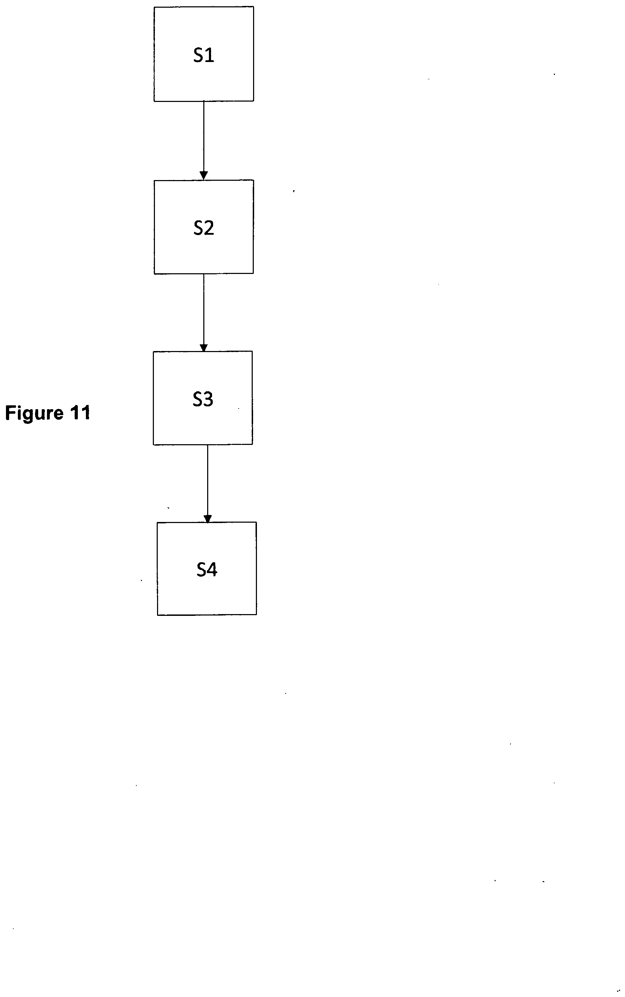

- Fig. 11: a flow chart of a preferred embodiment of the setting method.

### 5. Detailed description of preferred embodiments of the present invention

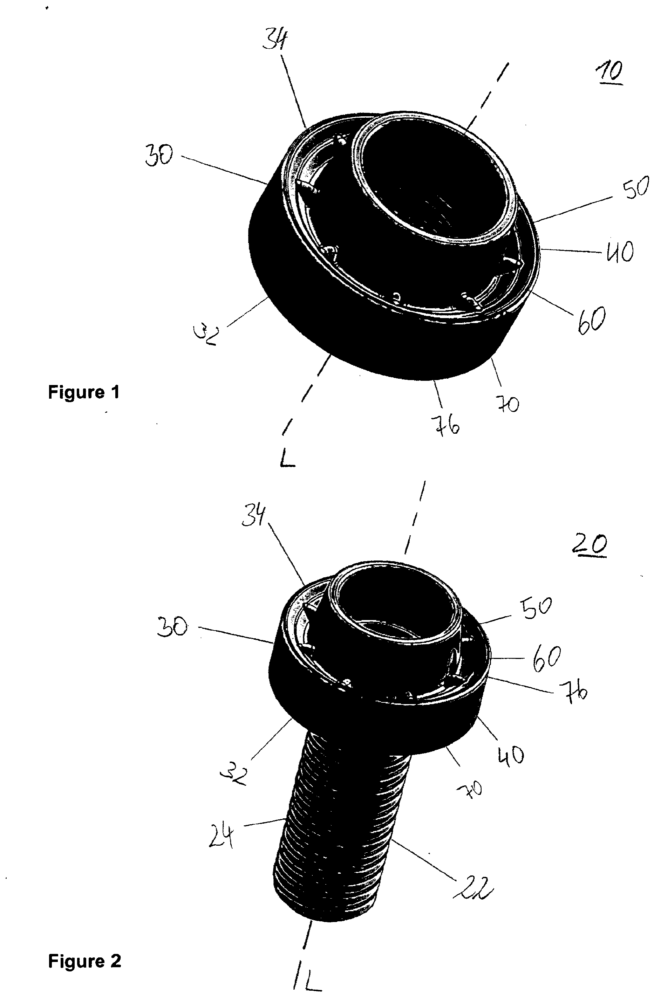

Figure 1 shows a first preferred embodiment of an insert element 10 to be inserted and fastened within a component opening O. The insert element 10 is preferably formed like a nut having a base body 30 and a central opening 12, in particular a fastening opening.

The fastening opening 12 has an inner wall 14 extending circumferentially within said fastening opening 12. The fastening opening 12 is used for providing a fastening structure, like an inner thread, a snapping or latching structure or the like. Such fastening structures are generally known and widely used in the art.

The fastening opening 12 is centrally arranged within a base body 30. A central longitudinal axis L preferably runs through the center of the insert element 10; 20.

Further, the base body 30 has a mounting side 32. The mounting side 32 provides a construction for mounting a further component, an add-on part or the like, to the insert element 10; 20. In a nut design of the insert element 10, the mounting side 32 comprises the central fastening opening 12.

According to a further preferred embodiment of the insert element 20, the mounting side 32 comprises a fastening bolt 22 for mounting a component, an add-on part or the like to the fastening bolt 22 and, thus, to the insert element 20. The fastening bolt 22 preferably has an outer fastening structure 24 to realize the mounting function of the insert element 20. According to the preferred embodiment of figure 2, the fastening structure 24 is formed by an outer thread. It is further preferred using a latching structure or alternative systems for fastening. Besides such a friction-type connection, the fastening bolt 22 preferably forms a basis for a connection realized by means of adhesive.

Opposed to the mounting side 32, the base body 30 comprises a fastening side 34. The structure of the fastening side 34 realizes a reliable fastening of the insert element 10; 20 within a component opening O of the component C.

The fastening side 34 is preferably structured in a way to assure a reliable connection of the insert element 10; 20 within the component opening O. To this end, the fastening side 34 has a hollow-cylindrical shaft 40 extending co-axially to the central longitudinal axis L. The hollow-cylindrical shaft 40 starts within an annular groove 50 of the base body 30 and extends away from the base body 30.

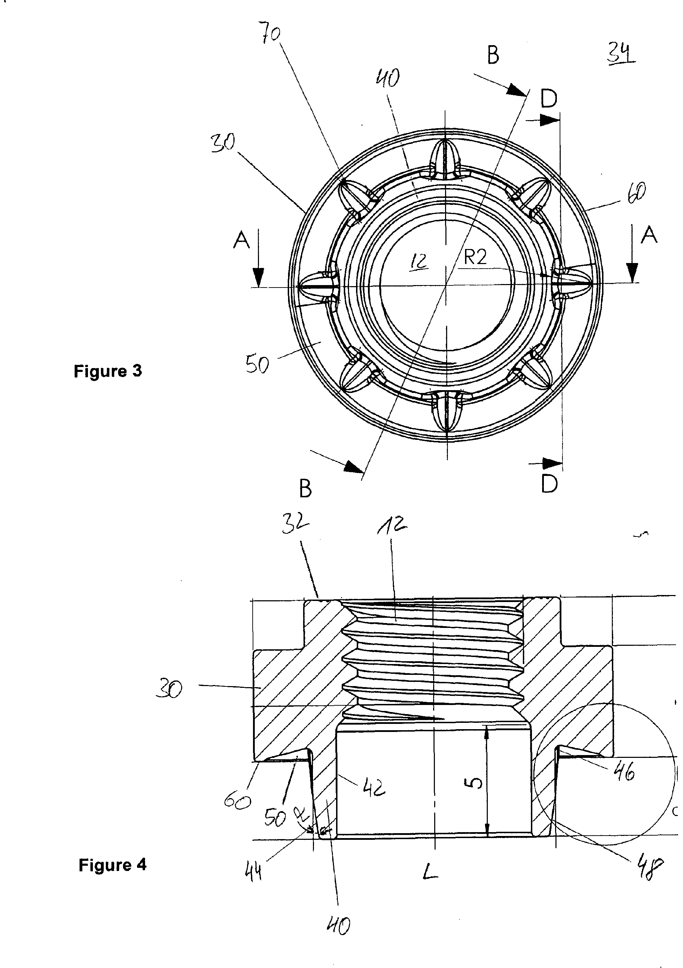

Figure 3 shows a top view of the fastening side 34 wherein further constructional details are derivable from the sectional views of figures 4, 7, 5 and 6.

Figure 3 shows the fastening side 34 of the insert element 10 formed like a nut. Accordingly, the central fastening opening 12 is surrounded by the hollow-cylindrical shaft 40. The hollow-cylindrical shaft 40 is surrounded by the annular groove 50 which is discussed in further detail below.

If the insert element 20 has the centrally arranged fastening bolt 22, the fastening side 34 has the same construction as used in combination with the nut-like insert element 10. As a consequence, the details of the fastening side 34 as described herein apply to both types of insert element 10; 20.

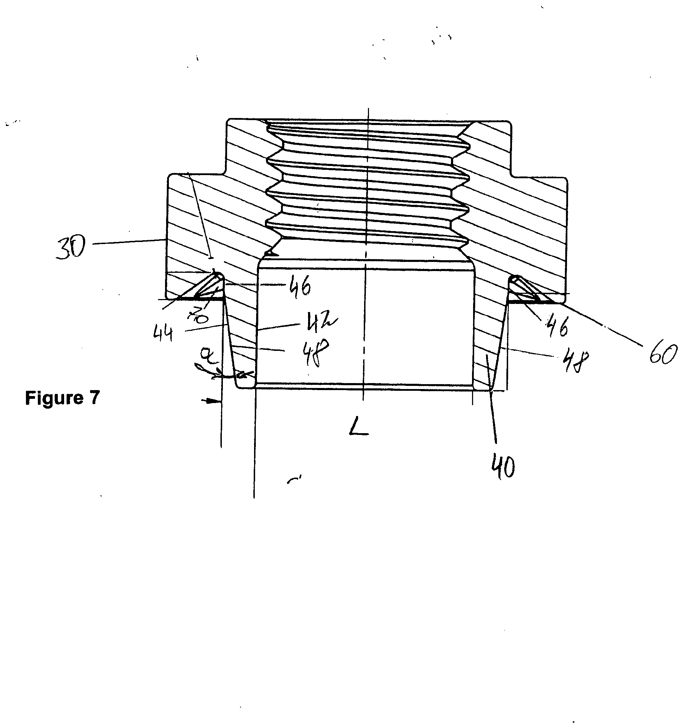

As shown in figures 4 and 7, the hollow-cylindrical shaft 40 has a circumferentially extending radial inner wall 42 and a circumferentially extending radial outer wall 44.

According to a preferred embodiment of the present invention, the radial inner wall 42 of the shaft 40 extends parallel to the longitudinal axis L.

According to a further preferred embodiment, the radial outer wall 44 has an inclined orientation so that the wall thickness of the shaft 40 is reduced in an axially outward direction, i.e. the hollow-cylindrical shaft 40 tapers in an axial direction facing away from the base body 30.

Based on the tapering configuration of the hollow-cylindrical shaft 40, an insertion of the insert element 10; 20 into a component opening O is facilitated. Furthermore, a possible clearance between a surrounding edge E of the opening O and the adjacent radial outer wall 44 is automatically reduced by introducing the hollow-cylindrical shaft 40 deeper into the component opening O.

According to a preferred embodiment of the present invention, the radial outer wall 44 of the hollow-cylindrical shaft 40 is subdivided in at least two axial annular sections 46, 48.

An axial inner annular section 46 preferably extends at least partly within the annular groove 50. The axial inner annular section 46 denotes a wall section of the radial outer wall 44 which is oriented parallel to the longitudinal axis L.

Based on the parallel arrangement, the annular groove 50 encompassing the hollow-cylindrical shaft 40 has a cross-sectional area formed right-angled triangularly.

Preferably, at an axially most outward position of the hollow-cylindrical shaft 40, an axial outer inclined annular section 48 is positioned. With respect to the central longitudinal axis L, the annular section 48 is inclined to the central longitudinal axis L if running in a direction away from the base body 30. Thereby, the hollow-cylindrical shaft 40 tapers in axial direction facing away from the base body 30.

Furthermore, the preferred inclination of the annular wall section 48 reduces an outer diameter of the hollow-cylindrical shaft 40 facilitating an introduction of the hollow-cylindrical shaft 40 into the component opening O.

The same configuration as described above is shown in figure 7.

According to a preferred configuration of the outer radial wall 44 of the shaft 40, the axial outer inclined annular section 48 and the longitudinal axis L or a parallel line thereto form an angle α as depicted in figures 4, 5, and 7. The angle α has a preferred size of 5° ≤ α ≤ 10°, preferably 7° ≤ α ≤ 9°, and further preferred α = 8.5°.

Based on the preferred range and values of the angle α, an insertion as well as a reliable and easy pre-installation of the insert element 10; 20 within the component opening O is preferably guaranteed.

As already mentioned above, the hollow-cylindrical shaft 40 is surrounded by the annular groove 50. The annular groove 50 serves for receiving the circumferential edge E of the component opening O. Said circumferential edge E is sandwiched between an inner first side wall 52 of the annular groove 50 and the radial outer wall 44 of the hollow-cylindrical shaft 40 of the insert element 10; 20, after being bent towards the base body 30 via crimping.

Radially inwardly, the annular groove 50 is limited by the second inner side wall extending annularly. Said second inner side wall runs parallel to the longitudinal axis L.

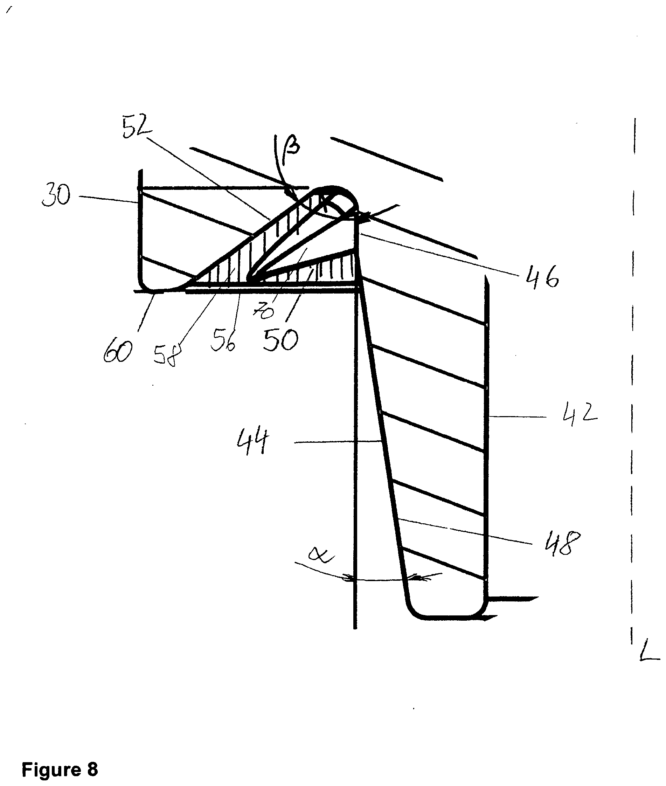

An imaginary third wall 56 limits the annular groove 50 facing away from the base body 30 (see figure 8). The imaginary third wall 56 extends perpendicularly to the longitudinal axis L. Thereby, the first, second and third walls 52, 56 form a cross-sectional area 58 of the annular groove 50 having a right-angled tri-angular shape, if viewed in an axial cut parallel to the central longitudinal axis L (see hatched area 58 in figure 8). In said right-angled tri-angular cross-sectional area 58, the first groove limiting wall 52 forms the hypothenuse, the second limiting wall 54 forms the adjacent side wherein the right angle is enclosed between the imaginary wall 56 and the second wall.

Preferably, the limiting walls 52 are provided as plain walls in order to support the material displacement of the component material within the annular groove 50. These plain walls 52 are preferably only interrupted by anti-rotation features as explained in more detail below.

According to a preferred embodiment of the invention, a receiving volume of the annular groove 50 is adapted in order to receive the material of the component C displaced in there. To this end, an angle β enclosed by the adjacent walls has a value of 45° ≤ β ≤ 65°.

Dependent on material properties of the component material, it has a size of 50° ≤ β ≤ 60°, and preferably β = 54°.

Further preferred, the annular groove 50 is circumferentially limited by an imprinting projection 60. As shown in the figures, the imprinting projection 60 has a ring shape, preferably a continuous ring shape. Furthermore, it projects in a direction of the hollow-cylindrical shaft 40 away from the base body 30. The imprinting ring-shape projection 60 preferably traps component material within the annular groove 50 so that it cannot be displaced out of the annular groove 50 during continuation of the setting process of the insert element 10; 20.

Based on the configuration of the insert element 10; 20 used as a nut or a bolt, it is subjected to a torque in a variety of frequent applications. Therefore, a turning resistance of the insert element 10; 20 around its longitudinal axis L is preferably increased by means of a plurality of anti-rotation webs 70. The anti-rotation webs 70 are preferably arranged evenly distributed within the annular groove 50. These anti-rotation webs 70 have preferably a bead-like configuration extending in a radial direction with respect to the longitudinal axis L.

According to a preferred embodiment of the anti-rotation webs 70, it starts at the axial inner annular section 46 of the radial outer wall 44 of the hollow-cylindrical shaft 40. Adjacent to the axial inner annular section 46, the anti-rotation web 70 has its largest expansion in axial direction and in tangential direction with respect to the inner annular section 46.

As preferred, the axial and the tangential expansion are reduced in radial direction of the anti-rotation web 70. Further, the axial expansion roughly follows the inclination angle β of the first limiting wall 52. In comparison to figures 4 and 8, the axial expansion does not run parallel to the first limiting wall 52.

Further preferred, the axial expansion of the anti-rotation web 70 does not run perpendicular to the longitudinal axis L. Instead, the axial limit 72 of the anti-rotation web 70 runs in a preferred angle γ < 90°, preferably in the range of 85° ≥ γ ≥ 65°, further preferred 85° > γ ≥ 75°.

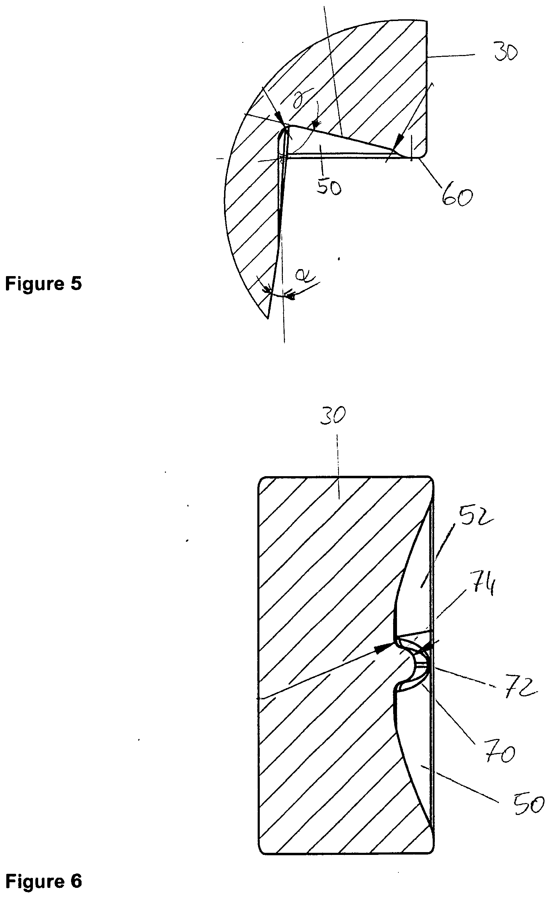

The above configuration is also derivable from figure 6 showing a sectional view of figure 3 along the line D-D. It is visible that the axial limit 72 of the anti-rotation web 70 rises within the rise of the limiting wall 52 of the annular groove 50.

Further preferred, figure 6 depicts the cross-sectional area 74 of the anti-rotation web 70. It has a circumferential shape similar to a parable of a quadratic function f(x) = α·x² having the factor α in a range of 0.1 ≤ α ≤ 1, preferably 0.1 ≤ α ≤ 0.9.

Based on its axial extension, the anti-rotation web 70 forms and engages an indent in the component material sandwiched between the shaft wall 44 and the limiting first side wall 52. The positive fit preferably formed thereby enhances the turn resistance of the insert element 10; 20.

According to a further preferred embodiment of the present invention, the anti-rotation web 70 starts at the axial inner annular section 46 within a radial depression 76 before running radially outwardly. The depression preferably has a half-elliptical shape if the ellipsis is cut along its semi-minor axis.

Further preferred, the double of the semi-minor axis is larger as compared to the tangential expansion of the anti-rotation web 70.

Also preferred, the semi-major axis is larger than the axial expansion of the anti-rotation web 70 contacting the axial inner annular section 46.

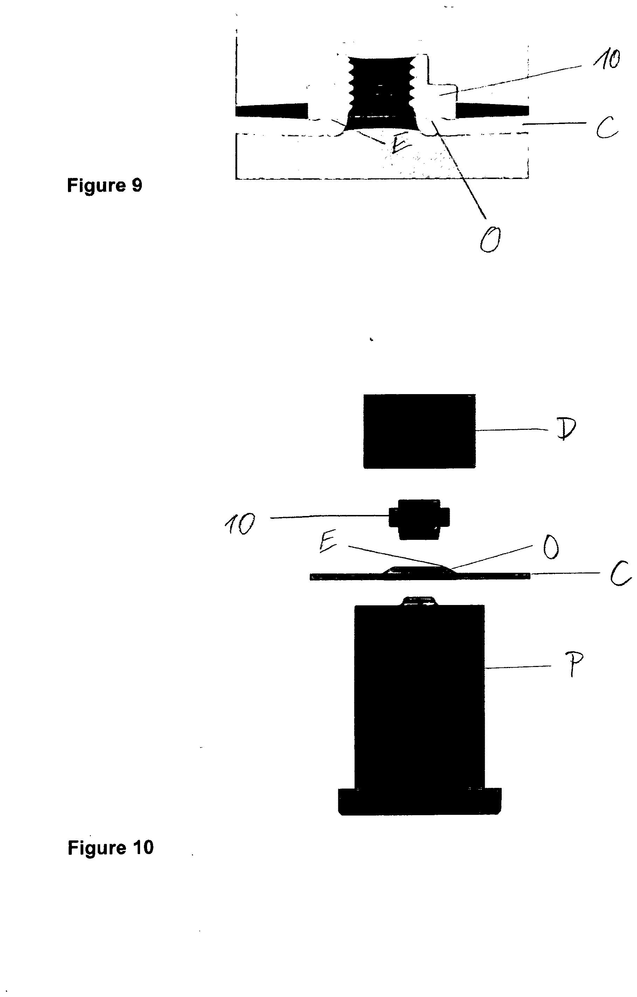

The present invention further provides a component C with a component opening O in which the insert element 10; 20 was set (see figure 9).

Figure 10 shows a schematic illustration of a punch P and a die D for setting the insert element 10 within the component opening O. In a first step S1, the punch P and the die D are co-axially aligned to each other.

The punch P has a central axial circular protection facing the die D. In the second step S2, the component opening O is coaxially arranged with the protection of the punch P and the installation die D.

Thereafter, the insert element 10; 20 as described above is positioned within the opening O (step S3).

It is also preferred to pre-position the insert element 10; 20 within the component opening O before placing the same between the punch P and the die D.

Finally, the punch P and the die D are relatively moved to each other to set the insert element 10; 20. As the punch P is relatively moved to the die D, the punch projection deforms the shaft 40 radially outwardly, and flares a portion of the shaft 40. Accordingly, the punch projection spreads the shaft 40 open and bends a part of the shaft wall 44 over the opening edge E of the component C. Thereby, the edge E of the component opening O will be sandwiched between the first inner wall 52 of the annular groove 50 and the radial outer shaft wall 44.

### 6. List of reference signs

- 10: insert element formed like and nut
- 12: central fastening opening
- 20: insert element having a fastening bolt
- 22: fastening bolt
- 30: base body
- 32: mounting side
- 34: fastening side
- 40: hollow-cylindrical shaft
- 42: radial inner wall
- 44: radial outer wall
- 46: axial inner annular section
- 48: axial outer inclined annular section
- 50: annular groove
- 52: first side wall
- 56: imaginary third wall
- 58: tri-angular cross-sectional area of the groove 50
- 60: imprinting ring-shaped projection
- 70: anti-rotation web
- 72: axial limit of the anti-rotation web
- 74: cross-sectional area of the anti-rotation web 70
- 76: radial depression
- C: indent component
- O: component opening
- E: surrounding edge of the component opening O
- P: punch
- D: die

## Claims

1. An insert element (10; 20) with a cylindrical base body (30) comprising, along a central longitudinal axis L and opposing one another, a fastening side (34) for fastening the insert element (10; 20) to a component opening and a mounting side (32) for mounting an add-on part,
a. at the mounting side (32), a fastening bolt (22) projects from the base body (30) or a fastening opening (12) having a fastening structure extends into the base body (30),
b. the fastening side (34) includes a hollow-cylindrical shaft (40) coaxially to the central longitudinal axis of the base body having a circumferential shaft wall, wherein in a direction axially facing away from the base body, a radial inner side of the shaft wall extends parallel, and a radial outer side of the shaft wall extends radially inwardly in an inclined manner with respect to the central longitudinal axis, so that the hollow cylindrical shaft tapers, and
c. an annular groove (50) encompasses the hollow cylindrical shaft (40), the groove (50) forming a triangular cross-sectional area (58) in an axial cut parallel to the central longitudinal axis (L), wherein
d. the cross-sectional area of the annular groove (50) is formed right-angled triangularly and a first wall side (52) of the annular groove (50) extends along a hypotenuse and a second wall side of the annular groove (50) extends along an adjacent side of the right-angled triangular area (58).

2. The insert element (10; 20) according to claim 1, wherein within the annular groove (50), a plurality of anti-rotation webs (70) is provided, being evenly distributed in circumferential direction, extending radially and projecting in an axial direction away from the base body (30).

3. The insert element (10; 20) according to claim 2, in which the anti-rotation webs are formed bead-like and are each ending in a radial depression (76) in the radial outside (44) of the shaft wall (40).

4. The insert element (10; 20) according to claim 3, in which the radial depression (76) has a larger extension than an incoming anti-rotation web (70) so that the radial depression (76) forms a radial anti-rotation depression.

5. The insert element (10; 20) according to one of the preceding claims wherein the first (52) and the second limiting even wall of the annular groove (50) include an angle β in the range from 45° to 65°, preferably 50° to 60°, further preferred of 54 °.

6. The insert element (10; 20) according to one of the preceding claims wherein the inclined radial outside (44) of the hollow cylindrical shaft (40) includes an angle in the range from 5° to 10°, preferably 7° to 9°, and most preferred of 8.5 ° with the central longitudinal axis (L) of the insert element (10; 20).

7. A setting method of an insert element (10; 20) according to one of the claims 1 to 6 in a component opening (O) of a component (C), comprising the following steps:
a. providing an installation punch (P) and an installation die (D) co-axially aligned to each other so that a central axial circular projection of the installation punch (P) facing the installation die (D) (step S1),
b. arranging the component opening (O) of the component (C) in a co-axial alignment with the central axial circular projection between the installation punch (P) and the installation die (D) (step S2),
c. placing the insert element (10; 20) according to one of the preceding claims 1 to 7 into the component opening (O) with the hollow-cylindrical shaft (40) facing to the installation punch (P) (step 3), and
d. relatively moving the installation die (D) and the installation punch (P) to each other in a setting motion (step S4) whereby the hollow-cylindrical shaft (40) is fastened by crimping within the component opening (O).

## Patentansprüche

1. Ein Einsetzelement (10; 20) mit einem zylindrischen Grundkörper (30) umfassend, entlang einer zentralen Längsachse L und einander gegenüberliegend, eine Befestigungsseite (34) zum Befestigen des Einsetzelements (10; 20) an einer Bauteilöffnung und eine Montageseite (32) zum Montieren eines Anbauteils,
a. an der Montageseite (32) steht ein Befestigungsbolzen (22) von dem Grundkörper (30) vor, oder eine Befestigungsöffnung (12), die eine Befestigungsstruktur aufweist, erstreckt sich in den Grundkörper (30),
b. die Befestigungsseite (34) umfasst einen hohlzylindrischen Schaft (40) koaxial zu der zentralen Längsachse des Grundkörpers, der eine umfängliche Schaftwand aufweist, wobei sich in einer von dem Grundkörper abgewandten axialen Richtung eine radiale Innenseite der Schaftwand parallel erstreckt, und eine radiale Außenseite der Schaftwand erstreckt sich bezogen auf die zentrale Längsachse geneigt radial einwärts, sodass sich der hohlzylindrische Schaft verjüngt, und
c. eine Ringnut (50) umgibt den hohlzylindrischen Schaft (40), wobei die Nut (50) einen dreieckigen Querschnittsbereich (58) in einem axialen Schnitt parallel zu der zentralen Längsachse (L) bildet, wobei
d. der Querschnittsbereich der Ringnut (50) rechtwinklig dreieckig ausgebildet ist und sich eine erste Wandseite (52) der Ringnut (50) entlang einer Hypotenuse erstreckt und eine zweite Wandseite der Ringnut (50) erstreckt sich entlang einer angrenzenden Seite des rechtwinkligen Dreiecksbereichs (58).

2. Das Einsetzelement (10; 20) gemäß Anspruch 1, wobei innerhalb der Ringnut (50) eine Vielzahl Verdrehsicherungsstege (70) bereitgestellt ist, die gleichmäßig in umfänglicher Richtung verteilt sind, sich radial erstrecken und in einer axialen Richtung von dem Grundkörper (30) vorspringen.

3. Das Einsetzelement (10; 20) gemäß Anspruch 2, bei dem die Verdrehsicherungsstege wulstähnlich ausgebildet sind und jeweils in einer radialen Vertiefung (76) in der radialen Außenseite (44) der Schaftwand (40) enden.

4. Das Einsetzelement (10; 20) gemäß Anspruch 3, bei dem die radiale Vertiefung (76) eine größere Ausdehnung aufweist als ein einlaufender Verdrehsicherungssteg (70), sodass die radiale Vertiefung (76) eine radiale Verdrehsicherungsvertiefung bildet.

5. Das Einsetzelement (10; 20) gemäß einem der vorhergehenden Ansprüche, wobei die erste (52) und die zweite einschränkende ebene Wand der Ringnut (50) einen Winkel β im Bereich von 45° bis 65°, vorzugsweise 50° bis 60°, und weiter bevorzugt 54°, aufweist.

6. Das Einsetzelement (10; 20) gemäß einem der vorhergehenden Ansprüche, wobei die geneigte radiale Außenseite (44) des hohlzylindrischen Schafts (40) einen Winkel im Bereich von 5° bis 10°, vorzugsweise 7° bis 9° und am meisten bevorzugt von 8,5° mit der zentralen Längsachse (L) des Einsetzelements (10; 20) aufweist.

7. Ein Setzverfahren eines Einsetzelements (10; 20) gemäß einem der Ansprüche 1 bis 6 in eine Bauteilöffnung (O) eines Bauteils (C), umfassend die folgenden Schritte:
a. Bereitstellen eines Installationsstempels (P) und einer Installationsmatrize (D), die koaxial zueinander ausgerichtet sind, sodass ein zentraler axialer kreisförmiger Vorsprung des Installationsstempels (P) der Installationsmatrize (D) zugewandt ist (Schritt S1),
b. Anordnen der Bauteilöffnung (O) des Bauteils (C) in einer koaxialen Ausrichtung mit dem zentralen axialen kreisförmigen Vorsprung zwischen dem Installationsstempel (P) und der Installationsmatrize (D) (Schritt S2),
c. Platzieren des Einsetzelements (10; 20) gemäß einem der vorhergehenden Ansprüche 1 bis 7 in der Bauteilöffnung (O), wobei der hohlzylindrische Schaft (40) dem Installationsstempel (P) zugewandt ist (Schritt 3), und
d. relatives Bewegen der Installationsmatrize (D) und des Installationsstempels (P) zueinander in einer Setzbewegung (Schritt S4), wobei der hohlzylindrische Schaft (40) durch Krimpen innerhalb der Bauteilöffnung (O) befestigt wird.

## Revendications

1. Élément d'insertion (10 ; 20) doté d'un corps de base (30) cylindrique comportant, le long d'un axe longitudinal L central et en regard l'un de l'autre, un côté de serrage (34) pour serrer l'élément d'insertion (10 ; 20) sur une ouverture de composant et un côté de montage (32) pour monter une partie complémentaire,
a. au niveau du côté de montage (32), un boulon de serrage (22) fait saillie du corps de base (30) ou une ouverture de serrage (12) ayant une structure de serrage s'étend dans le corps de base (30),
b. le côté de serrage (34) inclut un arbre cylindrique (40) creux, coaxial à l'axe longitudinal central du corps de base ayant une paroi d'arbre circonférentiel, dans lequel, dans une direction axialement opposée au corps de base, un côté intérieur radial de la paroi d'arbre s'étend parallèlement, et un côté extérieur radial de la paroi d'arbre s'étend radialement vers l'intérieur de manière inclinée par rapport à l'axe longitudinal central, de sorte que l'arbre cylindrique creux s'effile, et
c. une rainure (50) annulaire englobe l'arbre cylindrique (40) creux, la rainure (50) formant une zone transversale (58) triangulaire dans une coupe axiale parallèle à l'axe longitudinal (L) central, dans lequel
d. la zone transversale de la rainure (50) annulaire forme un triangle rectangle et une première paroi latérale (52) de la rainure (50) annulaire s'étend le long d'une hypoténuse et un second côté de paroi de la rainure (50) annulaire s'étend le long d'un côté adjacent de la zone de triangle rectangle (58).

2. Élément d'insertion (10 ; 20) selon la revendication 1, dans lequel, au sein de la rainure (50) annulaire, sont prévues une pluralité de toiles anti-rotation (70), réparties de manière régulière dans une direction circonférentielle, s'étendant radialement et faisant saillie dans une direction axiale opposée au corps de base (30).

3. Élément d'insertion (10 ; 20) selon la revendication 2, dans lequel les toiles anti-rotation sont constituées en forme de billes et se terminent chacune dans un creux (76) radial dans l'extérieur (44) radial de la paroi d'arbre (40).

4. Élément d'insertion (10 ; 20) selon la revendication 3, dans lequel le creux radial (76) a une extension plus grande qu'une toile anti-rotation (70) entrante, de sorte que le creux radial (76) forme un creux anti-rotation radial.

5. Élément d'insertion (10 ; 20) selon l'une des revendications précédentes, dans lequel la première (52) et la seconde paroi uniforme de limitation de la rainure (50) annulaire incluent un angle β dans la plage allant de 45° à 65°, de préférence de 50° à 60°, de préférence encore de 54°.

6. Élément d'insertion (10 ; 20) selon l'une des revendications précédentes, dans lequel l'extérieur (44) radial incliné de l'arbre cylindrique (40) creux inclut un angle dans la plage allant de 5° à 10°, de préférence de 7° à 9° et de préférence surtout de 8,5° avec l'axe longitudinal (L) central de l'élément d'insertion (10 ; 20).

7. Procédé de réglage d'un élément d'insertion (10 ; 20) selon l'une des revendications 1 à 6 dans une ouverture (O) de composant d'un composant (C), comportant les étapes suivantes :
a. la fourniture d'un poinçon d'installation (P) et d'un coin d'installation (D) alignés coaxialement l'un par rapport à l'autre, de sorte qu'une saillie circulaire axiale centrale du poinçon d'installation (P) soit face au coin d'installation (D) (étape S1),
b. l'agencement de l'ouverture (O) de composant du composant (C) dans un alignement coaxial avec la saillie circulaire d'axe central entre le poinçon d'installation (P) et le coin d'installation (D) (étape S2),
c. le placement de l'élément d'insertion (10 ; 20) selon l'une des revendications 1 à 7 précédentes dans l'ouverture (O) de composant, l'arbre cylindrique (40) creux faisant face au poinçon d'installation (P) (étape 3), et
d. le déplacement réciproque du coin d'installation (D) et du poinçon d'installation (P) l'un par rapport à l'autre dans un mouvement de réglage (étape S4), moyennant quoi l'arbre cylindrique (40) creux est serré par sertissage au sein de l'ouverture (O) de composant.
